# EUROPÄISCHE PATENTSCHRIFT

(11) **EP 3 701 778 B1**
(45) Veröffentlichungstag und Bekanntmachung des Hinweises auf die Patenterteilung: **19.03.2025**
(21) Anmeldenummer: 19212027.7
(22) Anmeldetag: 28.11.2019
(51) Int. Cl.: A01B 15/04, A01B 15/06, A01B 35/22

(54) **ARBEITSWERKZEUG, INSBESONDERE BODENBEARBEITUNGSWERKZEUG**
WORKING TOOL, ESPECIALLY SOIL WORKING TOOL
OUTIL DE TRAVAIL, EN PARTICULIER OUTIL DE TRAITEMENT DU SOL

(30) Priorität: 28.02.2019 DE 102019105132
(43) Veröffentlichungstag der Anmeldung: 02.09.2020
(60) Teilanmeldung: 25155732.8
(73) Patentinhaber: Betek GmbH & Co. KG, 78733 Aichhalden (DE)
(72) Erfinder: KRÄMER, Ulrich, 77709 Wolfach (DE)
(74) Vertreter: Herrmann, Jochen

(56) Entgegenhaltungen:
- EP-A1- 0 923 851
- EP-A1- 2 962 538
- CN-A- 1 074 965
- DE-A1- 102015 122 620
- US-A1- 2018 100 291

## Beschreibung

Die Erfindung betrifft ein Arbeitswerkzeug, insbesondere ein Bodenbearbeitungswerkzeug, vorzugsweise ein landwirtschaftliches Bodenbearbeitungswerkzeug, mit einem Träger, der im Bereich einer Arbeitsseite wenigstens zwei Arbeitselemente aufweist, wobei die Arbeitselemente aus einem Hartwerkstoff, insbesondere Hartmetall bestehen oder diese einen Hartwerkstoff aufweisen, wobei die Arbeitselemente einen Arbeitsabschnitt aufweisen, und wobei die Arbeitselemente aneinandergereiht auf dem Träger, vorzugsweise stoffschlüssig befestigt sind.

Im Sinne der Erfindung sind als Arbeitswerkzeuge insbesondere landwirtschaftliche Boden-Schneidwerkzeuge, beispielsweise Schare, insbesondere Pflugschare, Rübenrodeschare oder sonstige Schare, Grubber, Grubberspitzen, Scharflügel, Kreiseleggenzinken oder dergleichen zu verstehen.

Aus der DE 10 2009 029 894 A1 sind landwirtschaftliche Bodenbearbeitungswerkzeuge bekannt, die im Bereich eines Trägers eine Arbeitskante aufweisen. An der Arbeitskante ist der Träger mit einer Reihe von Schneidelementen bestückt. Diese Schneidelemente können im Sinne der Erfindung Arbeitselemente bilden. Die Schneidelemente weisen ein schenkelartiges Befestigungsstück auf. An das schenkelartige Befestigungsstück ist rückwärtig und entgegengesetzt zur Werkzeug-Vorschubrichtung ein Ansatz angeformt. Die Schneidelemente bestehen aus einem Hartwerkstoff, nämlich Hartmetall und sind mit dem Träger verlötet. Die Schneidelemente sind abstandslos aneinander angereiht.

Bekannte Hartwerkstoffe im Sinne der Erfindung sind beispielsweise Hartmetalle, synthetische Diamanten, Kubisch kristallines Bornitrid, Titannitrid, Siliciumnitrid, Siliciumcarbid, Borcarbid; Wolframcarbid; Vanadiumcarbid; Titancarbid; Tantalcarbid; Keramikmaterial, insbesondere Aluminiumoxid; Zirconiumdioxid.

Die Erfinder haben erkannt, dass bei Bauteilen, die stark schwingenden Belastungen ausgesetzt sind, die Gefahr besteht, dass die aneinandergereihten Schneidelemente im Anreihbereich, aufgrund der Bauteilverformung des Trägers, beschädigt werden. Diese Beschädigungen können dann entstehen, wenn die aneinandergereihten Schneidelemente auf der Druckseite des Trägers montiert sind. Bei einer Biegung des Trägers erfolgt auf der Druckseite, beabstandet zu der neutralen Faser des Trägers, um die der Träger gebogen wird, eine Stauchung der Schneidelemente an den Anreihseiten. Hierdurch werden Mikrorisse in den Schneideelementen initiiert. Diese Mikrorisse pflanzen sich im Bauteil fort und führen zu Ausbrüchen. Aufgrund der Ausbrüche entsteht eine Schwächung des Schneidelements, die zu einem kompletten Verlust des beschädigten Schneidelements führen kann.

Aufgabe der Erfindung ist es ein Arbeitswerkzeug der eingangs erwähnten Art zu schaffen, welches sich bei einfacher Fertigbarkeit durch eine verbesserte Standzeit der Arbeitselemente auszeichnet.

Diese Aufgabe wird dadurch gelöst, dass die Anreihseiten zumindest eines Teils der benachbarten Arbeitselemente im Anreihbereich zumindest bereichsweise unter Bildung eines Spaltbereichs einander beabstandet gegenüberstehen, und dass wenigstens eines der Arbeitselemente einen Abstandshalter aufweist, der die Arbeitselemente unter Bildung des Spaltbereichs auf Abstand hält.

Die Arbeitselemente können für den Fertigungsprozess aneinandergereiht auf dem Träger positioniert werden. Über die Abstandshalter werden die Arbeitselemente im Spaltbereich zuverlässig auf Abstand gehalten. Anschließend erfolgt die stoffschlüssige Verbindung der Arbeitselemente mit dem Träger. Die stoffschlüssige Verbindung kann beispielsweise durch eine Lotverbindung oder eine Klebeverbindung bewirkt werden. Wenn beispielsweise eine Lotverbindung, nämlich eine Hartlotverbindung verwendet wird, so kann beispielsweise zwischen den Arbeitselementen und dem Träger ein Hartlot positioniert werden. Dieser vormontierte Verbund wird in einen Ofen eingebracht und auf die Schmelztemperatur des Lotmaterials gebracht. Die Abstandshalter stellen sicher, dass abhängig von der zu erwartenden Bauteilverformung, zumindest ein vorgegebener Abstandsbereich im Spaltbereich zwischen den Anreihseiten der Arbeitselemente eingehalten und nicht unterschritten wird. Nachdem das Arbeitswerkzeug aus dem Ofen entnommen und abgekühlt wird, steht es zur Verwendung zur Verfügung. Während des Betriebseinsatzes werden, durch Schwingungen bedingte Verformungen des Trägers im Spaltbereich ausgeglichen. Insbesondere verhindert der Spaltbereich, dass die Arbeitselemente bei einer Verformung des Trägers an den Anreihseiten gequetscht werden. Hierdurch wird die Gefahr einer Rissbildung an den Anreihseiten verhindert. Dies führt einer verbesserten Standzeit für die Arbeitselemente.

Von Vorteil ist es, wenn die Abstandshalter an dem gegenüberliegenden Arbeitselement anlegen. Im Sinne der Erfindung müssen die Abstandshalter aber nicht an dem gegenüberliegenden Arbeitselement anliegen, sondern es kann hier ein Abstand zwischen dem Abstandshalter und dem benachbarten Arbeitselement gebildet sein. Wichtig ist, dass ein gewisser Mindestabstand zwischen den Anreihseiten, der im Spaltbereich einander gegenüber stehenden Arbeitselemente, nicht unterschritten wird.

Die Aufgabe der Erfindung wird auch dadurch gelöst, dass die Anreihseiten zumindest eines Teils der benachbarten Arbeitselemente im Anreihbereich zumindest bereichsweise unter Bildung eines Spaltbereichs einander beabstandet gegenüberstehen, und dass wenigstens eines der benachbarten Arbeitselemente im Bereich der Anreihseite einen Konturabschnitt aufweist, mittels dem der Abstand im Spaltbereich kontinuierlich und/oder diskontinuierlich erweitert ist.

Bei dieser erfindungsgemäßen Lösung wird wieder über den Spaltbereich verhindert, dass die aneinandergereihten Arbeitselemente im Spaltbereich bei einer Biegebeanspruchung gequetscht werden können. Dabei bauen die Erfinder auf der Erkenntnis auf, dass sich die Stauchung des Trägers mit zunehmendem Abstand von der neutralen Faser bei einer Bauteilbiegung kontinuierlich vergrößert. Dementsprechend kann die Spaltbreite dicht an der neutralen Faser, um die die Bauteilbiegung erfolgt, minimiert werden. Mit zunehmendem Abstand von der neutralen Phase vergrößert sich die Spaltbreite. Mit der erfindungsgemäßen Lösung wird mithin eine optimierte Auslegung des Spaltbereichs möglich, wobei eine Beschädigung der Arbeitselemente bei starken Biegebeanspruchungen während des Arbeitseinsatzes verhindert ist. Zudem wird über die optimierte Auslegung des Spaltbereichs auch eine Verschleißoptimierung erreicht. Insbesondere ist es von Vorteil, wenn die Breite des Spaltbereichs möglichst gering gewählt ist, um hier einen abrasiven Verschleißangriff des bearbeiteten Materials, beispielsweise Bodenmaterials zu verhindern.

Gemäß einer bevorzugten Ausgestaltungsvariante der Erfindung sind die beiden Lösungen gemäß den unabhängigen Ansprüchen 1 und 2 kombiniert. Dementsprechend wird ein Arbeitswerkzeug gestaltet, bei dem im Bereich der Anreihseiten wenigstens ein Abstandshalter vorgesehen ist. Zudem weist wenigstens eines der benachbarten Arbeitselemente im Bereich der Anreihseite einen Konturabschnitt auf, mittels dem der Abstand im Spaltbereich kontinuierlich und/oder diskontinuierlich erweitert ist.

Während des Fertigungsprozesses, in dem das Verbindungsmaterial noch nicht seine Position/oder Form gefunden hat, stellen die Abstandshalter den gewünschten Mindestabstand zwischen den Arbeitselementen zuverlässig ein. Über den variierenden Abstand im Spaltbereich wird die Spaltbreite des fertig montierten Arbeitswerkzeugs optimiert eingestellt.

Besonders bevorzugt ist es vorgesehen, dass der wenigstens eine Abstandshalter zumindest bereichsweise im Spaltbereich angeordnet ist. An dieser Stelle beeinflusst der Abstandshalter nicht die übrige Geometrie des Arbeitselementes. Nach der Fertigung des Arbeitswerkzeuges kann der Abstandshalter dementsprechend am Werkzeug verbleiben und muss nicht in einem separaten Schritt abgetrennt werden Zudem lässt sich das Arbeitselement durch diese Maßnahme einfach fertigen. Durch geschickte Anordnung des Abstandshalters, vorzugsweise im Bereich der neutralen Faser, um die die Bauteilbiegung herum erfolgt, beeinflusst er die Funktionalität des Werkzeugs nicht oder nur wenig.

Gemäß einer denkbaren Erfindungsvariante kann es vorgesehen sein, dass der Spaltbereich zumindest teilweise mittels eines Verbindungsmaterials, beispielsweise mittels eines Lotmaterials oder eines Klebematerials gefüllt und dass der Abstandshalter zumindest bereichsweise in dem Verbindungsmaterial eingebettet ist.

Gemäß einer weiteren Erfindungsvariante kann es vorgesehen sein, dass das eine oder beide benachbarte Arbeitselemente wenigstens einen angeformten Abstandshalter aufweisen. Wird nur ein Abstandshalter am Arbeitselement vorgesehen, so lassen sich beispielsweise einfach aufgebaute, vorzugsweise baugleiche Abstandshalter aneinanderreihen um eine Reihe von Arbeitselementen zu bilden. Bei der Verwendung von zwei Abstandshalter können diese zueinander beabstandet, beispielsweise an einer Anreihseite des Arbeitselements, vorgesehen sein, um dadurch den definierten Spaltbereich zuverlässig einstellen zu können. Denkbar ist es auch, dass einer oder mehrere Abstandshalter auf gegenüberliegenden Anreihseiten des Arbeitselements vorgesehen sind. Weiterhin ist es denkbar, dass die Abstandshalter benachbarter Arbeitselemente im Spaltbereich aneinanderliegen. Beispielsweise können die Abstandshalter im Bereich der neutralen Faser aneinanderliegen. Bei aneinanderliegenden Abstandshaltern wird ein Bewegungsbereich in einem Kotaktpunkt oder einer Kontaktlinie oder einer Kontaktfläche der Abstandshalter gebildet, auf dem sich die Abstandshalter gegeneinander bewegen können. Hierdurch kann beispielsweise ähnlich eines Lagers eine Abrollgeometrie bewirkt werden an der die benachbarten Arbeitselemente bei einer Verformung des Trägers gegeneinander abrollen können. Denkbar ist auch, dass die Abstandshalter so gestaltet sind, dass sie bei einer Bauteilverformung definiert brechen, ohne dass dadurch eine substantielle Beschädigung des Arbeitselements entsteht.

Gemäß der Erfindung kann es vorgesehen sein, dass die beiden benachbarten Arbeitselemente im Bereich der Anreihseiten jeweils einen Konturabschnitt aufweisen, mittels denen der Abstand im Spaltbereich kontinuierlich und/oder diskontinuierlich erweitert ist. Hierdurch lässt sich gezielt der Verlauf des Spaltbereiches nach den individuellen Wünschen und Anforderungen an das Arbeitselemente einstellen.

Eine denkbare Erfindungsvariante ist dergestalt, dass der Träger an einer Seite oder an zwei gegenüberliegenden Seiten einen Befestigungsabschnitt aufweist, um ein einseitig oder beidseitig eingespanntes Biegeelement zu bilden. Bei einem einseitig eingespannten Biegeelement wird ein stark schwingfähiges Bauteil, beispielsweise ein Scharflügel gebildet. Beidseitig eingespannte Biegeelemente können beispielsweise bei Siebträgern von Gesteins- oder Ölsand-Siebanlagen verwendet sein

Bei Arbeitswerkzeugen können beispielsweise mehrere Arbeitselemente aneinandergereiht sein. Dabei lässt sich ein gleichbleibender Abstand zwischen den Arbeitselementen verwirklichen, was eine einfache Fertigung ermöglicht. Denkbar ist es jedoch auch, dass ein variierender Abstand zwischen den Arbeitselementen vorgesehen ist. So kann beispielsweise der Spaltabstand mit zunehmendem Abstand vom Befestigungsabschnitt verändert werden. Abhängig von der zu erwartenden individuellen Bauteilverformung im Bereich des jeweiligen Arbeitselements, kann der Spaltabstand gezielt eingestellt werden.

Die Erfindung lässt sich bei verschiedenen Ausführungsvarianten von Arbeitswerkzeugen einsetzen. Beispielsweise können Arbeitselemente verwendet sein, bei denen als Arbeitsabschnitt eine vorzugsweise gerundete Schneidkante verwendet ist. Denkbar ist es auch, dass die Arbeitselemente eine Verdrängerkante oder eine Brechkante aufweisen.

Eine bevorzugte Erfindungsvariante ist dergestalt, dass zumindest eines der Arbeitselemente einen Befestigungsabschnitt mit einem Stützabschnitt aufweist, wobei der Befestigungsabschnitt vorzugsweise plattenförmigen ausgebildet ist, dass der Stützabschnitt gegenüber einer Auflagefläche des Trägers abgestützt ist, und dass zwischen der Auflagefläche und dem Stützabschnitt zumindest bereichsweise eine stoffschlüssige Verbindung angeordnet ist, die das Arbeitselement mit dem Träger verbindet. Der Befestigungsabschnitt dient zur sicheren Verbindung des Arbeitselements mit dem Träger. Ist der Befestigungsabschnitt plattenförmig ausgebildet, so kann er besondere im Anschluss an den Arbeitsabschnitt, vorzugsweise die Schneidkante des Arbeitselements, mittelbar oder unmittelbar anschließen. Er bildet dort ein Ableitelement, mittels dem abgetragenes Material abgeführt werden kann. Dabei schützt der Befestigungsabschnitt dann den Bereich des Trägers, der im Anschluss an den Arbeitsabschnitt einer starken Verschleißbelastung mit hohem Verschleißdruck ausgesetzt ist.

Ein bevorzugtes Arbeitswerkzeug kann dergestalt sein, dass an den Befestigungsabschnitt des zumindest einen Arbeitselements der Arbeitsabschnitt mittelbar oder unmittelbar einteilig angeschlossen ist, dass der Befestigungsabschnitt ein dem Arbeitsabschnitt abgewandtes Ende aufweist, und dass sich der Querschnitt des Arbeitselements in Richtung von dem Arbeitsabschnitt in Richtung auf das abgewandte Ende zumindest bereichsweise kontinuierlich und/oder diskontinuierlich verjüngt. Hierdurch wird eine auf den Verschleißdruck angepasste materialoptimierte Bauweise geschaffen, über die teures Hartstoff-Material eingespart werden kann.

Denkbar ist es auch, dass an den Befestigungsabschnitt ein Ansatz angeformt ist, der einen weiteren Stützabschnitt aufweist, mit dem er gegenüber einer Stützfläche des Trägers abgestützt ist, und dass zwischen der Stützfläche und dem weiteren Stützabschnitt eine stoffschlüssige Verbindung angeordnet ist, die das Arbeitselement mit dem Träger verbindet. Vorzugsweise ist der Arbeitsabschnitt im Bereich des Ansatzes ausgebildet. Zwischen dem Ansatz und dem Träger ist eine stoffschlüssige Verbindung gehalten, über die anstehende Bearbeitungskräfte in den Träger abgeleitet werden können. Hierdurch wird eine zuverlässige Abstützung gewährleistet, die verhindert das es im Übergangsbereich zwischen dem Ansatz und dem Befestigungsabschnitt zum Bruch kommt, wenn stark stoßartige Beanspruchungen, auf den Arbeitsabschnitt einwirken. Dabei kann die stoffschlüssige Verbindung aufgrund ihrer Materialeigenschaften auch eine Pufferwirkung mit Dämpfungseffekt übernehmen. Vorzugsweise wird die Stützfläche des Trägers von dem freien Ende des Trägers gebildet ist,

Bei solchen Arbeitswerkzeugen ist es denkbar, dass der Stützabschnitt des Befestigungsabschnitts und der weitere Stützabschnitt des Ansatzes unter Bildung eines Winkels oder geradlinig ineinander übergehen.

Eine weitere Erfindungsvariante kann dadurch gekennzeichnet sein, dass das Arbeitselement eine Oberseite aufweist, die eine Ableitfläche bildet, wobei die Ableitfläche vorzugsweise von dem Befestigungsabschnitt gebildet ist, dass die Ableitfläche mittelbar oder unmittelbar in den Arbeitsabschnitt übergeht, dass sich an den Arbeitsabschnitt eine Freifläche mittelbar oder unmittelbar anschließt, und dass die Ableitfläche eine ebene Fläche bildet, die mit der Freifläche einen spitzen Winkel, vorzugsweise im Bereich zwischen 15° und 90° einschließt, oder dass die Ableitfläche eine zumindest bereichsweise konvexe oder konkave Geometrie aufweist. Die Anordnung des Arbeitselements auf dem Träger ist dabei vorzugsweise so, dass die Ableitfläche in Richtung der Vorschubrichtung vorne auf der Vorderseite des Trägers angeordnet ist. Die Freifläche erstreckt sich dann so, dass sie entgegengesetzt zur Vorschubrichtung orientiert ist. So kann ein Freischnitt bewirkt werden, der die Belastung des Arbeitswerkzeuges reduziert. Es wird zudem ein Nachschärfeffekt während des Betriebseinsatzes ermöglicht, der zu einer stets arbeitsfreudigen Arbeitskante, insbesondere Schneidkante führt. Zudem reduziert sich die erforderliche Zugleistung für eine Antriebsmaschine, was zu einem geringeren Kraftstoffverbrauch führt. Eine konkave Ausgestaltung der Ableitfläche führt zu einer Reduzierung des Verschleißdrucks im unmittelbaren Anschluss an den Arbeitsabschnitt. Eine konvexe Ausgestaltung der Ableitfläche führt zu einer Gestaltung, mit der eine verbesserte Brechwirkung im zu bearbeiten Bodenmaterial, im Anschluss an den Arbeitsabschnitt, bewirkt wird. Wie dies vorstehend beschrieben wurde, kann der Arbeitsabschnitt insbesondere eine Schneidkante bilden oder aufweisen.

Eine bevorzugte Erfindungsvariante ist dergestalt, dass der Abstandshalter im Bereich des Befestigungsabschnitts des Arbeitselements angeformt ist. Bei üblichen Bodenbearbeitungswerkzeugen, insbesondere landwirtschaftlichen Bodenbearbeitungswerkzeugen ist der Befestigungsabschnitt somit in dem Bereich angeordnet, welcher bei Belastung üblicherweise auf der Zugseite, beabstandet zu der neutralen Phase des Trägers angeordnet ist. Während des Betriebseinsatzes werden die Abstandshalter mithin nicht unzulässig gestaucht.

Weiterhin ist es denkbar, dass der wenigstens eine Konturabschnitt zumindest bereichsweise im Bereich des Ansatzes des Arbeitselements verläuft. Bei üblichen Bodenbearbeitungswerkzeugen, insbesondere landwirtschaftlichen Bodenbearbeitungswerkzeugen ist der Ansatz somit in dem Bereich angeordnet, welcher bei Belastung üblicherweise auf der Druckseite, beabstandet zu der neutralen Faser des Trägers angeordnet ist. Wenn während des Betriebseinsatzes eine Verformung dahingehend stattfindet, dass eine Stauchung auf der Druckseite ansteht, so wird eine Zerstörung der Arbeitselemente zuverlässig ausgeschlossen.

Wenn vorgesehen ist, dass die Arbeitselemente jeweils eine Anlagefläche aufweisen, mittels denen sie an einem Anlegeabschnitt des Trägers angelegt sind, wobei der Anlegeabschnitt vorzugsweise parallel zu dem Arbeitsabschnitt verläuft, dann lassen sich die Arbeitselemente an dem Anlegeabschnitt für die Fertigung positionieren, sodass die Arbeitsabschnitte der Arbeitselemente aufeinander reproduzierbar ausgerichtet werden können. Hierdurch wird eine exakte Fertigung möglich.

Bevorzugt ist es erfindungsgemäß vorgesehen, dass der Träger in Form eines Blechs oder blechförmig, beispielsweise auch als Schmiedeteil, ausgebildet ist. Dies kann insbesondere bedeuten, dass die Dicke "d" des Trägers in Verhältnis zu der größten Längserstreckung "L" des Trägers im Arbeitsbereich des Trägers im Bereich zwischen d/L = 0,02 bis 0,4 beträgt

Ein erfindungsgemäßes Arbeitswerkzeug kann dadurch gekennzeichnet sein, dass die Abstandshalter als Noppen, oder als Rippen ausgebildet sind. Mit Noppen können beispielsweise punktförmige Anlagegeometrien verwirklicht werden. Mit Rippen lassen sich linien- oder flächenförmige Anlagegeometrien verwirklichen. Je nach Anwendungsfall kann die gewünschte Geometrie des Abstandshalters gewählt werden

Gemäß einer möglichen Erfindungsausgestaltung kann es vorgesehen sein dass der Spaltbereich senkrecht zur Spaltbreite eine Spalthöhe aufweist, die sich zwischen einer Oberseite und einer gegenüberliegend der Oberseite angeordneten Unterseite erstreckt, dass auf halber Spalthöhe eine sich senkrecht zur Spalthöhe erstreckende Mittelebene angeordnet ist, und dass das zumindest eine Abstandselement auf der Seite ober- oder unterhalb der Mittelebene angeordnet ist, die der Zugseite des Trägers zugewandt ist oder dass die Mittelebene das zumindest eine Abstandselement schneidet. Auf diese Weise wird sichergestellt, dass das Abstandselement bei einer Bauteilverformung nicht oder nur wenig gequetscht und damit nicht beschädigt werden kann.

Ein erfindungsgemäßes Arbeitswerkzeug kann dergestalt sein, dass der Spaltbereich mit seiner Spaltlängserstreckung senkrecht zu dem Arbeitsabschnitt verläuft. Denkbar ist es jedoch auch, dass die Spaltlängserstreckung im Winkel zu dem Arbeitsabschnitt steht. Diese Ausrichtung reduziert die Gefahr von Auswaschung des Spaltbereichs während des Betriebseinsatzes. Hierzu kann es alternativ auch vorgesehen sein, dass zumindest eines der Arbeitselemente ein oder mehrere Versatzstücke aufweist, die einen winkelförmigen Verlauf des Spaltbereichs in Richtung der Richtung der Spaltlängserstreckung schaffen.

Eine besonders bevorzugte Erfindungsvariante sieht vor, dass zumindest eines der Abstandselemente ein oder mehrere Versatzstücke aufweist, die einen winkelförmigen Verlauf des Spaltbereichs oder einen Versatz in Richtung der Spalthöhe schaffen. Auch durch diese Maßnahme kann ein Auswaschen des Spaltbereichs während des Betriebseinsatzes verhindert oder reduziert werden.

Aus Gründen der Materialersparnis kann es vorgesehen sein, dass sich der Abstandshalter nur über einen Teilbereich der Spalthöhe des Spaltbereichs erstreckt Weiterhin kann es vorgesehen sein, dass der Abstandshalter im Abstand zu wenigstens einer der an den Spaltbereich anschließenden Endflächen des Arbeitselements steht.

Bei einer Verwendung von Abstandshaltern im Verbindungsmaterial erweist es sich für gängige Bodenbearbeitungswerkzeuge, insbesondere von landwirtschaftlichen Bodenbearbeitungsmaschine als geeignet, wenn vorgesehen ist, dass die im Verbindungsmaterial als Abstandshalter angeordneten Partikel einen mittleren Durchmesser im Bereich zwischen 50µm und 800µm aufweisen.

Die Erfindung wird im Folgenden anhand von in den Zeichnungen dargestellten Ausführungsbeispielen näher erläutert. Es zeigen:
Figur 1 ein Bodenbearbeitungswerkzeug in perspektivischer Darstellung,
Figur 2 eine Flügelschar des Bodenbearbeitungswerkzeugs gemäß Figur 1 in perspektivischer Darstellung,
Figur 3 ein Detail des Werkzeugs gemäß Figur 2 in Seitenansicht,
Figur 4 eine schematische Frontansicht auf das Werkzeug gemäß Figur 2,
Figur 4a eine der Figur 4 entnommene Detaildarstellung,
Figur 5 eine Variation des Werkzeugs gemäß Figur 2 in Seitenansicht,
Figur 6 ein der Figur 5 entnommenes Detail,
Figuren 7A bis 7C, weitere Details des Werkzeugs gemäß Figur 5,
Figur 8 aneinandergereihte Arbeitselemente eines Arbeitswerkzeugs in Draufsicht,
Figur 9 eine weitere Variante aneinandergereihter Arbeitselemente eines Arbeitswerkzeugs,
Figur 10 eine weitere Variante aneinandergereihter Arbeitselemente eines Arbeitswerkzeugs.

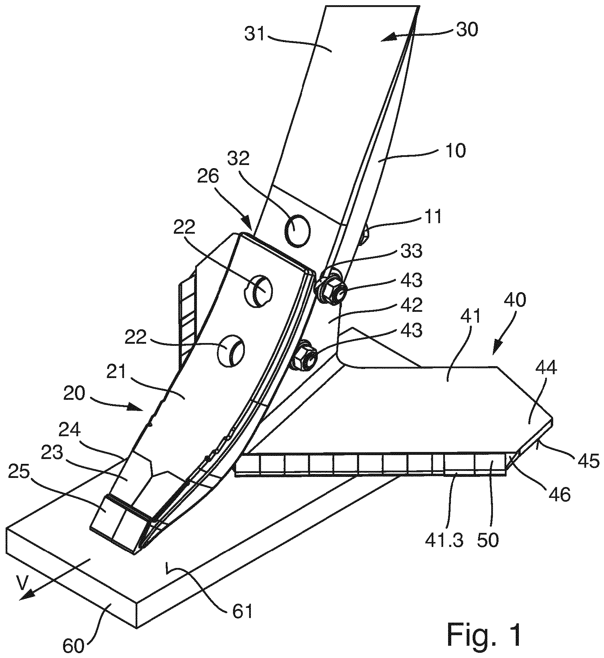

Figur 1 zeigt ein Bodenbearbeitungswerkzeug 20, nämlich eine Flügelschar für eine landwirtschaftliche Bodenbearbeitungsmaschine. Solche Bodenbearbeitungswerkzeuge 20 dienen zur Bearbeitung einer landwirtschaftlichen Fläche 60, in deren Oberfläche 61 das Bodenbearbeitungswerkzeug 20 eindringt. Die landwirtschaftliche Bodenbearbeitungsmaschine weist einen Grindel 10 auf, an dem die Flügelschar montiert ist. Das Bodenbearbeitungswerkzeug 20 besitzt eine Grubberspitze mit einem Basisteil 21 aus einem Stahlwerkstoff. Das Basisteil 21 ist mit Schraubaufnahmen 22 versehen.

Weiterhin weist das Basisteil 21 an seinem freien Ende ein Arbeitselement 25 auf. Dieses Arbeitselement 25 wird von wenigstens einem Hartstoffelement gebildet, das mit dem Basisteil 21 verbunden ist. Beispielsweise kann das Arbeitselement 25 ein Hartmetall-Element sein, dass mit dem Basisteil 21 stoffschlüssig verbunden, vorzugsweise verlötet ist. Das Arbeitselement 25 besitzt eine Schneidkante, die das freie Ende des Arbeitselements 25 bildet. Das Arbeitselement 25 weist einen plattenförmigen Befestigungsabschnitt auf. An diesen plattenförmigen Befestigungsabschnitt schließt sich einteilig ein rückwärtiger Ansatz an, der im Winkel zu dem plattenförmigen Befestigungsabschnitt stehen kann. Das Arbeitselement 25 ist unter Vermittlung von Lotmaterial sowohl an dem plattenförmigen Befestigungsabschnitt als auch dem rückwärtigen Ansatz an dem Basisteil 21 befestigt. Dabei stützt sich der rückwärtige Ansatz des Arbeitselements 25 unter Vermittlung von Lotmaterial auf dem freien Ende des Basisteils 21 ab. Wie die Figur 1 zeigt, können auch mehrere Arbeitselemente nebeneinander gereiht vorgesehen sein. Hierdurch wird die Bruchgefahr der Arbeitselemente reduziert.

Weiterhin können an der Scharspitze Schutzelemente 23 vorgesehen sein. Im vorliegenden Ausführungsbeispiel sind die Schutzelemente 23 im Anschluss an die Arbeitselemente 25 angeordnet. Die Schutzelemente 23 schützen dann zumindest bereichsweise den Teil des Basisteils 21, der sich an die Arbeitselemente 25 anschließt. Weiterhin kann es optional vorgesehen sein, dass die Schutzelemente 23 seitliche Kanten 24 aufweisen, die als seitliche Schneidkanten dienen, um einen seitlichen Freischnitt zu bewirken.

Wie Figur 1 weiter erkennen lässt, ist am Grindel 10 ein Leitelement 30 befestigt. Das Leitelement 30 besteht aus einem Stahlwerkstoff und ist vorderseitig, also in Vorschubrichtung v vorne am Grindel 10 angeordnet. Dem Grindel 10 abgewandt weist das Leitelement 30 eine Ableitfläche 31 auf. Die Ableitfläche 31 kann gebogen und/oder gewendelt ausgebildet sein. Das Leitelement 30 kann einen endseitigen, der Scharspitze zugewandten Steckansatz 33 aufweisen, der in eine rückwärtig an der Scharspitze ausgebildete Steckaufnahme 26 eingesetzt ist. Dabei überdeckt ein Deckabschnitt der Scharspitze das Ende des Leitelements 30 und schützt dieses. Das Leitelement 30 kann beispielsweise eine Befestigungsaufnahme 32 aufweisen. Mittels einer Befestigungsschraube, die durch die Befestigungsaufnahme 32 und eine dazu fluchtende Schraubaufnahme des Grindels 10 hindurchgesteckt ist, kann das Leitelement 30 unter Verwendung einer Mutter 11 am Grindel 10 befestigt werden. Die Scharspitze ist ebenfalls mit dem Grindel 10 verschraubt, wozu eine oder mehrere Befestigungsaufnahmen 22 verwendet sein können. Denkbar ist es auch, dass eine Befestigungsaufnahme 22 zeitgleich auch zur Befestigung des freien Endes des Leitelements 30 am Grindel 10 verwendet ist. Hierzu wird eine Befestigungsschraube durch die Befestigungsaufnahmen 22 und die hierzu fluchtenden Befestigungsaufnahmen des Leitelements 30 und des Grindels 10 hindurchgesteckt.

Wie Figur 1 weiter erkennen lässt, sind am Grindel 10 beidseitig Arbeitswerkzeuge 40 befestigt. Die Arbeitswerkzeuge 40 sind vorliegend als Flügelschare ausgebildet. Die Arbeitswerkzeuge 40 besitzen einen Träger 41, an den ein Befestigungsabschnitt 42 angeschlossen ist. Unter Verwendung von Schrauben 43 lässt sich das Arbeitswerkzeug 40 mit dem Grindel 10 verschrauben (Befestigungsaufnahmen 42.1 für die Schrauben 43).

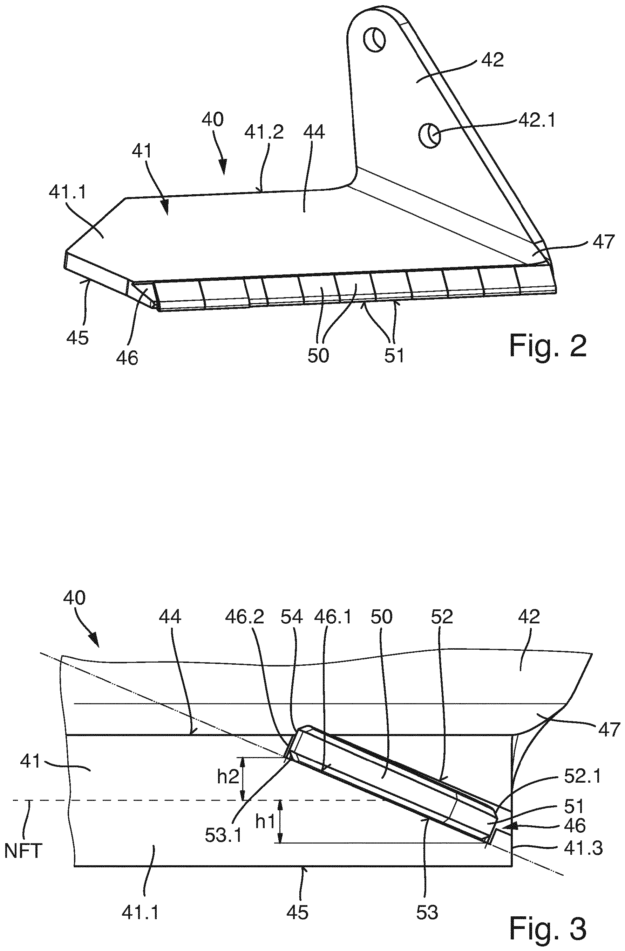

In Figur 2 ist das Arbeitswerkzeug 40 im Detail gezeigt. Wie diese Darstellung veranschaulicht, ist der Befestigungsabschnitt 42 über einen Übergangsabschnitt 47 mit dem Träger 41 verbunden. Vorzugsweise ist der Befestigungsabschnitt 42 von dem Träger 41 abgebogen.

Der Träger41 kann von einem blechförmigen Bauteil gebildet sein.

Der Träger 41 weist einen Endabschnitt 41.1 auf, welcher dem Befestigungsabschnitt 42 abgekehrt ist. Der Träger 41 besitzt eine Oberseite 44 und eine gegenüberliegende Unterseite 45. Weiterhin besitzt der Träger an seinem rückwärtigen, entgegengesetzt zur Vorschubrichtung V orientierten Ende eine Rückseite 41.2. Der Vorschubrichtung zugewandt besitzt der Träger 41 eine Arbeitselementaufnahme 46. Diese Arbeitselementaufnahme 46 kann beispielsweise in Form einer Ausfräsung aus dem Träger 41 ausgenommen sein.

An dem Träger 41 ist eine Vielzahl von Arbeitselementen 50 angebracht. Die Arbeitselemente 50 bestehen aus einem Hartstoffmaterial, vorzugsweise aus Hartmetall. Die Arbeitselemente 50 weisen jeweils einen Arbeitsabschnitt 51 auf. Die Arbeitsabschnitte 51 der Arbeitselemente 50 gehen ineinander über und bilden einen gemeinsamen, vorzugsweise durchgehenden Arbeitsabschnitt.

In Figur 3 ist eine Detailansicht des Arbeitswerkzeugs 40 nach der Figur 2 veranschaulicht. Wie diese Darstellung zeigt, ist die Arbeitselementaufnahme 46 in den Träger 41 eingebracht oder aus diesem ausgespart. Die Arbeitselementaufnahme 46 bildet eine Auflagefläche 46.1. Rückwärtig ist ein Anlegeabschnitt 46.2 vorgesehen. In oder an der Arbeitselementaufnahme 46 können die Arbeitselemente 50 befestigt werden. Die Verbindung der Arbeitselemente 50 mit dem Träger 41 erfolgt vorzugsweise mittels einer stoffschlüssigen Verbindung, vorzugsweise mittels einer Hart-Lötverbindung. Die Arbeitselemente 50 sind mit einer unterseitigen Stützseite 53 versehen. Mittels dieser Stützseite 53 sind die Arbeitselemente 50 unter Vermittlung von Lotmaterial auf die Auflagefläche 46.1 des Trägers 41 aufgelegt. Gegenüberliegend der Stützseite 53 bilden die Arbeitselemente 50 eine Oberseite 52. Diese Oberseite 52 dient im Anschluss an den Arbeitsabschnitt 51 als Ableitfläche. Über die Ableitfläche kann geschnittenes Bodenmaterial abgeleitet werden.

Die Arbeitselemente 50 besitzen in ihrem rückwärtigen Bereich eine Anlagefläche 54. Mit dieser Anlagefläche 54 können die Arbeitselemente 50 an einem Anlegeabschnitt 46.2 des Trägers exakt ausgerichtet werden.

Die Arbeitselemente 50 weisen Verjüngungsabschnitte 52.1, 53.1 auf. Mittels diesen Verjüngungsabschnitten 52.1, 53.1 gehen die Oberseite 52 und/oder die Stützseite 53 in eine oder mehrere der Seitenflächen des Arbeitselements 50 über. Diese Maßnahme kann bei allen Arbeitselementen nach der Erfindung vorgesehen sein.

Bei dem Ausführungsbeispiel nach Figur 3 geht die rückwärtige Anlagefläche und die dazu senkrecht stehenden Seitenflächen über die Verjüngungsabschnitte 52.1 und 53.1 sowohl in die Oberseite 52 als auch die Stützseite 53 über. Weiterhin sind an dem frontseitigen Arbeitsabschnitt 51 Verjüngungsabschnitte 52.1, 53.1 vorgesehen. Die Verjüngungsabschnitte 52.1 im Bereich der Oberseite 52 reduzieren die Bruchgefahr an den Eckbereichen des Arbeitselements. Die Verjüngungsabschnitte 52.1, 53.1 können, wie beispielsweise bei der Ausführung nach Figur 3 dargestellt, als abgefasste Kanten ausgebildet sein. Denkbar ist es auch, dass Verrundungen vorgesehen sind.

Wie Figur 3 erkennen lässt, können die Arbeitselemente 50 in eine taschenförmige Arbeitselementaufnahme 46 eingesetzt sein. Diese taschenförmige Arbeitselementaufnahme 46 wird im Bereich der Vorderseite von einem Materialabschnitt des Trägers 41 begrenzt. Rückseitig wird die Arbeitselementaufnahme 46 von der Anlagefläche 54 begrenzt.

In Figur 3 ist die neutrale Faser NFT des Trägers 41 dargestellt. Diese neutrale Faser bildet eine Ebene, die zwischen der Oberseite 44 und der Unterseite 45 gebildet ist. Um diese neutrale Phase NFT herum kann der Träger 41 bei einer Belastung auf den Endabschnitt 41.1 des Trägers 41 gebogen werden. Wenn der Träger 41, in der Darstellung gemäß Figur 2 bei einer Belastung von oben, auf den Endabschnitt 41.1 gebogen wird, so beträgt der maximale Abstand der Stützseite 53 zu der neutralen Faser NFT auf der Druckseite h1 . Der maximale Abstand der Stützseite 53 auf der Zugseite beträgt h2.

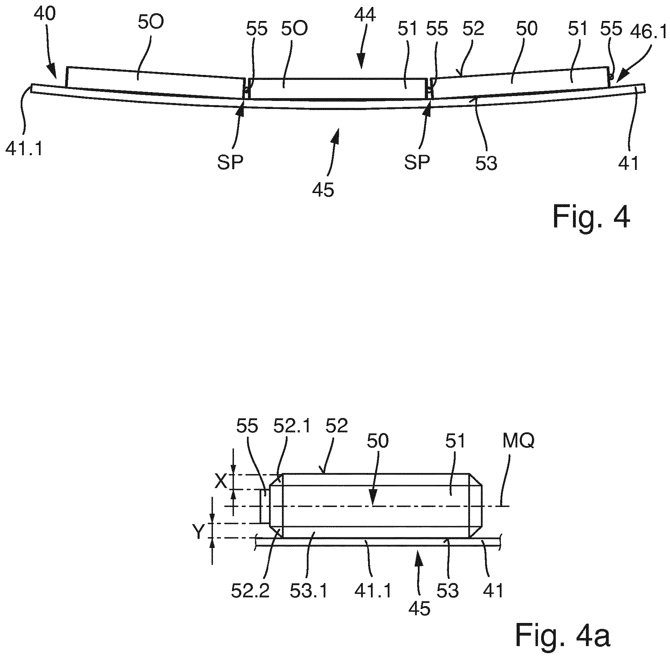

In Figur 4 ist schematisch die Anordnung der Arbeitselemente 50 auf dem Träger 41 gezeigt, wobei eine Ansicht senkrecht auf den Arbeitsabschnitt 51 gewählt wurde. Wie diese Darstellung erkennen lässt, sind die Arbeitselemente 50 unter Belassung eines Spaltbereichs SP aneinandergereiht. An jedes der Arbeitselemente 50 ist auf einer Seite (in der vorliegenden Ausführungsform an der rechte Seite) ein Abstandshalter 55 angeformt. Dabei ist der Abstandshalter 55 einteilig mit dem Arbeitselement 50 ausgebildet. Die Abstandshalter 55 überbrücken den Abstand im Spaltbereich SP zu dem benachbarten Arbeitselement 50. Dementsprechend werden von den benachbarten Arbeitselementen 50 Anreihseiten gebildet, die im Spaltbereich SP einander gegenüberstehen. Der Spaltbereich SP wird mit dem Abstandshalter 55 überbrückt. Die Befestigung der Arbeitselemente 50 auf dem Träger 41 erfolgt mittels einer stoffschlüssigen Verbindung, beispielsweise mittels einer Hartlot-Verbindung. Für die Fertigung wird ein Lotmaterial zwischen dem Träger 41 und der Stützseite 53 der Arbeitselemente 50 auf dem Träger 41 positioniert. Die Arbeitselemente 50 werden aneinandergereiht auf das Lotmaterial gesetzt. Dieser Verbund wird dann in einen Ofen gebracht. In dem Lötofen wird die vormontierte Einheit auf Löttemperatur gebracht. Dabei schmilzt das Lotmaterial auf. Es fließt dann in den Bereich zwischen der Stützseite 53 und der Auflagefläche 46.1. Zusätzlich fließt das Lotmaterial auch in den Spaltbereich SP und füllt diesen zumindest teilweise aus. Die Abstandshalter 55 garantieren eine Mindest-Spaltbreite im Spaltbereich SP.

Wenn nun, wie in Figur 4 dargestellt, eine Biegung des Trägers 41 während des Bearbeitungseinsatzes erfolgt, und diese Biegung zu einer Stauchung des Trägers 41 oberhalb der neutralen Faser NFT auf dem der Oberseite 44 zugewandten Bereich führt, so erfolgt auch mit der Biegung des Trägers 41 eine Verstellung der Arbeitselemente 50. Durch diese Verstellung wird der Spaltbereich 50 im Bereich der Oberseite 52 der Arbeitselemente 50 verkleinert, wohingegen die Spaltbreite im Bereich der Stützseite 53 vergrößert wird. Die Abstandshalter 55 garantieren hierbei, dass sich die Arbeitselemente 50 im Bereich der Oberseite 52 nicht berühren. Auf diese Weise wird eine Quetschung der Arbeitselemente 50 und eine damit einhergehende Beschädigung der Arbeitselemente 50 verhindert.

Die Abstandshalter 55 können als noppenförmige Erhebungen ausgebildet sein, wie dies Figur 4 zeigt. Denkbar ist es auch, wie dies in Figur 4A veranschaulicht ist, dass die Abstandshalter 55 als Rippen ausgestaltet sind, die seitlich von den Arbeitselementen einseitig oder beidseitig vorstehen. Vorzugsweise erstrecken sich die Abstandshalter 55 nur über einen Teilbereich der Höhe der Arbeitselemente 50 im Spaltbereich SP, wie dies Figur 4A zeigt. Weiterhin bevorzugt ist es, wenn die Abstandshalter 55 so ausgeformt sind, dass sie im Abstand x zur Oberseite 52 bzw. im Abstand y zur Stützseite 53 angeordnet sind. Dies stellt sicher, dass die Abstandshalter bei einer, beispielsweise gemäß Figur 4 gezeigten Deformation des Trägers 41, nicht beschädigt werden. Besonders bevorzugt sind die Abstandshalter 55 so angeordnet, dass sie auf halber Höhe die Mittelquerebene MQ der Arbeitselemente 50 schneiden.

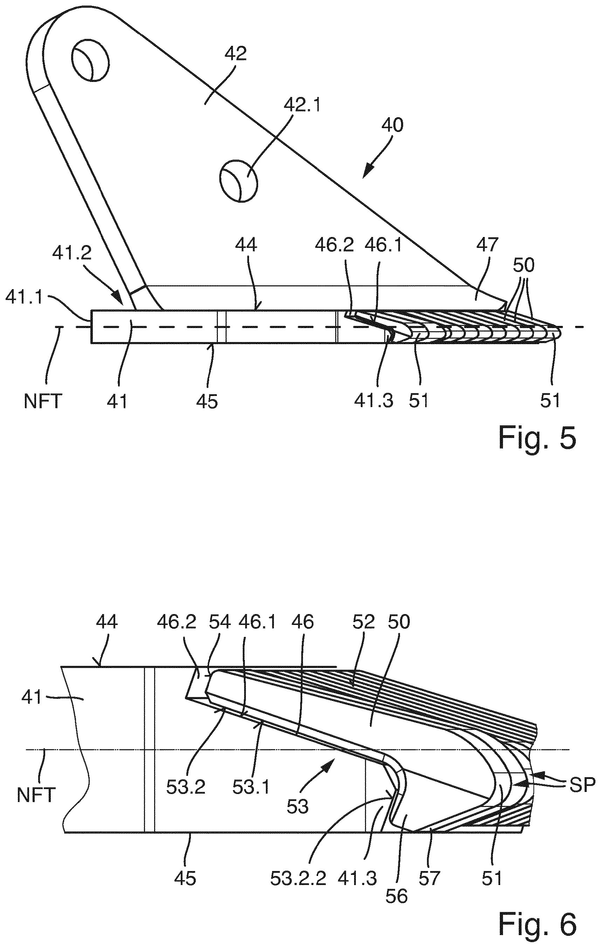

In den Figuren 5 und 6 ist eine alternative Ausgestaltung des Arbeitswerkzeugs 40 nach den Figuren 1 bis 4 gezeigt. Diese Variante unterscheidet sich von der vorher beschriebenen Variante durch die Gestaltung der Arbeitselemente 50. Zur Vermeidung von Wiederholungen wird bezüglich der gleich bleibenden Merkmale auf die obigen Ausführungen Bezug genommen.

Die Arbeitselemente 50 weisen einen plattenförmigen Befestigungsabschnitt auf, der den Stützabschnitt 53.2 bildet. Mit diesem Stützabschnitt 53.2 liegen die Arbeitselemente 50 auf einer Auflagefläche 46.1 des Trägers 41 auf. Die Arbeitselementaufnahme 46 kann wieder als Ausfräsung am Träger 41 ausgebildet sein. Der Stützabschnitt 53.2 geht im Bereich des freien Endes 41.3 des Trägers 41 in einen weiteren Stützabschnitt 53.2.2 über. Der Stützabschnitt 53.2 und der weitere Stützabschnitt 53.2.2 stehen dabei zueinander im Winkel. Der weitere Stützabschnitt 53.2.2 steht gegenüberliegend dem freien Ende 41.3 des Trägers 41.

Wie Figur 6 weiter erkennen lässt, geht die Oberseite 52 der Arbeitselemente 50 über den Arbeitsabschnitt 51 in eine rückwärtige Freifläche 57 über. Dabei schließen die rückwärtige Freifläche 57 und die Oberseite 52 des Befestigungsabschnitts einen spitzen Winkel ein.

Zur Befestigung der Arbeitselemente 50 auf dem Träger 41 kann wieder eine Lotverbindung verwendet werden. Dabei ist die Lotverbindung zwischen dem Stützabschnitt 53.2 bzw. dem weiteren Stützabschnitt 53.2.2 und der Auflagefläche 46.1 bzw. dem freien Ende 41.3 des Trägers 41 angeordnet.

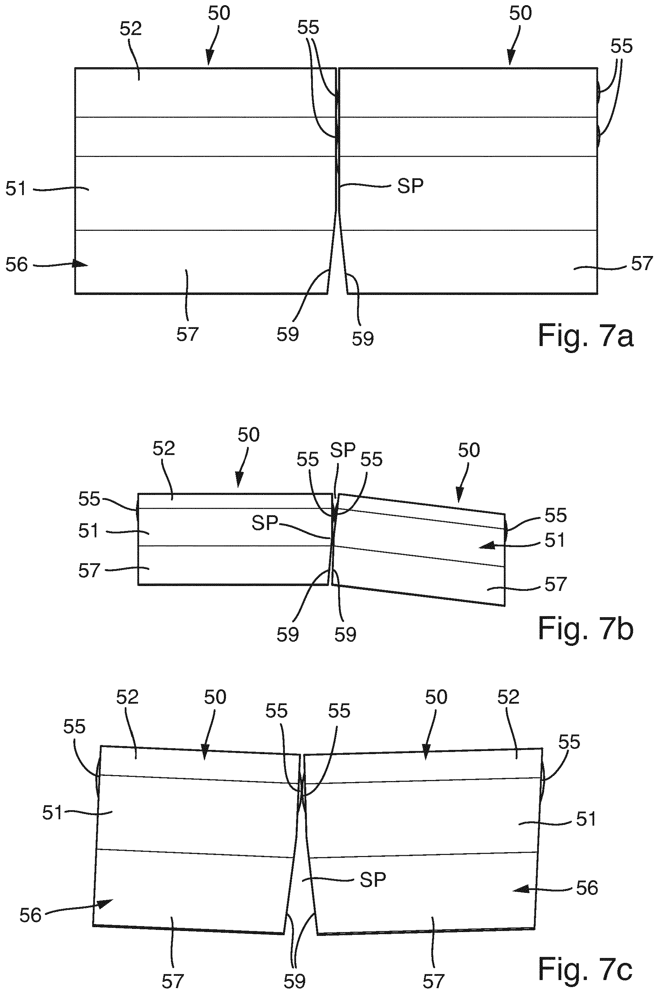

Wie die Figuren 7A bis 7C erkennen lassen, sind die Arbeitselemente 50 aneinandergereiht. Dabei wird zwischen den Arbeitselementen 50 ein Spaltbereich SP beibehalten. Dieser Spaltbereich SP wird von Abstandshalter 55 zumindest teilweise überbrückt.

Gemäß dem Ausführungsbeispiel nach Figur 7A sind an jedem Arbeitselement 50 an einer Anreihseite zwei Abstandshalter 55 einteilig angeformt. Die Abstandshalter 55 legen sich an der gegenüberliegenden Anreihseite des benachbarten Arbeitselements 50 an. Die Abstandshalter 55 sind dabei im Bereich des Arbeitsabschnitts 51 positioniert. Weiterhin sind an den Anreihseiten Konturabschnitte 59 an den Arbeitselementen 50 vorgesehen. Mittels dieser Konturabschnitte 59 wird der Spaltbereich kontinuierlich erweitert. Die Konturabschnitte 59 verlaufen dabei im Bereich der Ansätze 56.

In Figur 7B ist eine zu Figur 7A alternative Ausgestaltungsvariante gezeigt, bei der pro Anreihseite an einem Arbeitselement 50 jeweils ein Abstandshalter 55 verwendet ist. Damit stehen sich die Abstandshalter 55 zweier benachbarter Arbeitselemente 50 im Bereich ihrer Anreihseiten gegenüber. Im Spaltbereich SP gegenüber. Dabei kann die Zuordnung so getroffen sein, dass sich prinzipiell ein Bild wie bei Figur 7A ergibt, wobei zwei Abstandshalter 55 zueinander beabstandet im Spaltbereich SP angeordnet sind. Denkbar ist es jedoch auch, dass sich die Abstandshalter 55 berühren, wie dies Figur 7B zeigt.

In Figur 7B ist weiter dargestellt, dass auch bei der hier gezeigten Ausführungsvariante Konturabschnitte 59 vorgesehen sein können, mittels denen der Spaltbereich SP verbreitert wird. In Figur 7B ist weiter eine Betriebsstellung gezeigt, bei der der Träger 41, auf dem die Arbeitselemente 50 montiert sind in Betriebsstellung gebogen ist, wobei gemäß Figur 2 die Biegung so verläuft, dass die Unterseite 46 gestaucht und die Oberseite 44 im Bereich der Zugseite der neutralen Faser NFT des Trägers 41 angeordnet ist. Wie die Darstellung erkennen lässt, verhindern die Konturbereiche 59, dass sich die Arbeitselemente 50 im Spaltbereich SP bei einer solchen Verformung berühren.

In Figur 7C ist die entgegengesetzte Biegerichtung gezeigt. Dabei verhindern die Abstandshalter 55, dass sich die Arbeitselemente 50 im Spaltbereich SP unzulässig berühren und Schaden nehmen.

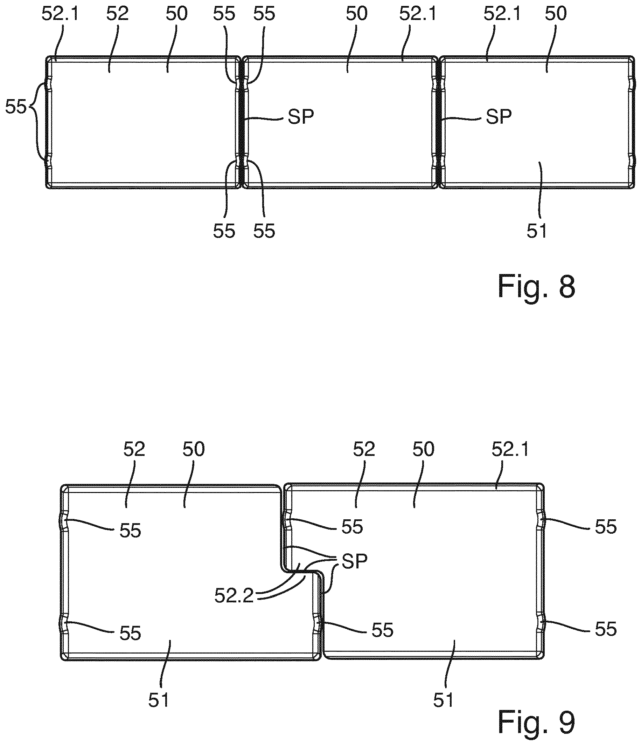

In Figur 8 ist eine Ausführungsvariante gezeigt, bei der auch zwei oder mehrere Abstandshalter 55 hintereinander angeordnet sein können.

Figur 9 zeigt eine Ausgestaltungsvariante, bei der die Arbeitselemente 50 angeformte Versatzstücke 52.2 aufweisen können. Diese Versatzstücke 52.2 schaffen einen winkelförmigen Verlauf des Spaltbereichs SP in Richtung der Spaltlängserstreckung. Hierdurch wird der Spaltbereich SP besser vor Auswaschungen geschützt.

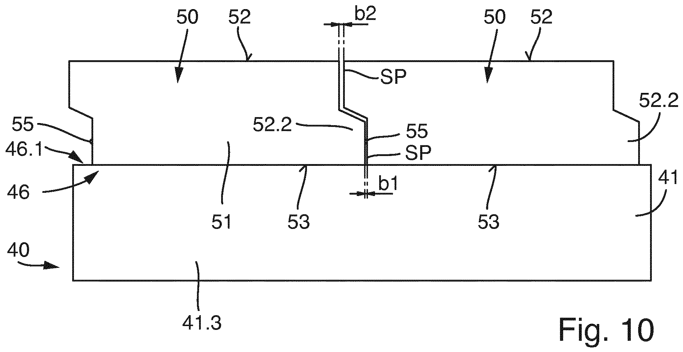

Denkbar ist es zusätzlich oder alternativ auch, dass gemäß Figur 10 zumindest eines der Abstandselemente 50 ein oder mehrere Versatzstücke 52.2 aufweist, die einen winkelförmigen Verlauf des Spaltbereichs SP oder einen Versatz in Richtung der Spalthöhe schaffen. Auch hierdurch wird ein Auswasch-Schutz geboten.

Wie Figur 10 erkennen lässt, kann der Spaltbereich SP auch so gestaltet sein, dass eine variierende Spaltbreite verwirklicht ist.

In dem in Figur 10 gezeigten Ausführungsbeispiel weist der Spaltbereich in dem der Oberseite 52 zugewandten Bereich eine größere Spaltbreite b2 auf, als in dem der Stützseite 53 zugewandten Bereich (Spaltbreite b1).

Denkbar ist es, dass über das eine oder die mehreren Versatzstücke 52.2 diese variierende Spaltbreite verwirklicht ist.

Wie Figur 10 weiter erkennen lässt, wird die Spaltbreite b1 in dem der Stützseite 53 zugewandten Bereich mittels des Abstandshalters 55 verwirklicht. Die Versatzstücke 52.2 sind so gestaltet, dass sich dann der Spaltbereich SP im durch die Versatzstücke 52.2 gebildeten Übergangsbereich erweitert. Im Anschluss an die Versatzstücke 52.2 kann dann eine weitere Erweiterung des Spaltbereiches SP auf die Spaltbreite b2 erfolgen. Denkbar ist es, dass die Spaltbreite im Bereich der Versatzstücke 52.2 der Spaltbreite b2 entspricht oder hiervon abweicht.

Die Versatzstücke 52.2 sind vorzugsweise im Bereich der mittig zwischen der Oberseite 52 und der Stützseite 53 gebildeten Mittel-Querebene der Arbeitselemente 50 angeordnet. Hierdurch ergibt sich ein verbessertes Festigkeitsverhalten bei Biegebeanspruchung. Denkbar ist es jedoch auch, dass die Versatzstücke 52.2 näher im Bereich der Stützseite 53, also unterhalb der Mittelquerebene angeordnet sind. Hierdurch kann der effektive Verschleißbereich vergrößert werden, bis die Oberseite 52 auf den Bereich der Versatzstücke 52.2 herunter verschlissen ist.

Ist ein verbesserter Auswaschschutz des Spaltbereichs SP gewünscht, so kann der durch die Versatzstücke 52.2 definierte Spaltbereich SP auch oberhalb der Mittelquerebene, näher im Bereich der Oberseite 52 belegen sein.

## Patentansprüche

1. Arbeitswerkzeug (40), insbesondere Bodenbearbeitungswerkzeug, vorzugsweise landwirtschaftliches Bodenbearbeitungswerkzeug, mit einem Träger (41), der im Bereich einer Arbeitsseite wenigstens zwei Arbeitselemente (50) aufweist, wobei die Arbeitselemente (50) aus einem Hartwerkstoff, insbesondere Hartmetall bestehen oder diese einen Hartwerkstoff aufweisen, wobei die Arbeitselemente (50) einen Arbeitsabschnitt (51) aufweisen, und wobei die Arbeitselemente (50) aneinandergereiht auf dem Träger (41), vorzugsweise stoffschlüssig befestigt sind,
wobei die Anreihseiten zumindest eines Teils der benachbarten Arbeitselemente (50) im Anreihbereich, zumindest bereichsweise unter Bildung eines Spaltbereichs (SP) einander beabstandet gegenüberstehen,
**dadurch gekennzeichnet,**
**dass** wenigstens eines der Arbeitselemente (50) einen Abstandshalter (55) aufweist der die Arbeitselemente (50) unter Bildung des Spaltbereichs (SP) auf Abstand hält, und dass der Abstandshalter (55) an dem gegenüberliegenden Arbeitselement (50) anliegt,
und/oder
**dadurch gekennzeichnet,**
**dass** wenigstens eines der benachbarten Arbeitselemente (50) im Bereich der Anreihseite einen Konturabschnitt (59) aufweist, mittels dem der Abstand im Spaltbereich (SP) kontinuierlich und/oder diskontinuierlich erweitert ist,
wobei sich die Spaltbreite mit zunehmendem Abstand von einer neutralen Faser (NFT), um die eine Bauteilbiegung des Trägers (41) erfolgt, vergrößert.

2. Arbeitswerkzeug (40) nach einem der vorhergehenden Ansprüche, **dadurch gekennzeichnet, dass** der wenigstens eine Abstandshalter (55) zumindest bereichsweise im Spaltbereich (SP) angeordnet ist, wobei vorzugsweise vorgesehen sein kann, dass der Spaltbereich (SP) zumindest teilweise mittels eines Verbindungsmaterials, beispielsweise mittels eines Lotmaterials oder eines Klebematerials gefüllt und dass der Abstandshalter (55) zumindest bereichsweise in dem Verbindungsmaterial eingebettet ist.

3. Arbeitswerkzeug (40) nach einem der vorhergehenden Ansprüche, **dadurch gekennzeichnet, dass** das eine oder beide benachbarte Arbeitselemente (50) wenigstens einen angeformten Abstandshalter (55) aufweisen, und/oder dass die Arbeitselemente (50) an gegenüberliegenden Seiten jeweils wenigstens einen Abstandshalter (55) aufweisen oder das die Arbeitselemente (50) nur einseitig einen Abstandshalter (55) aufweisen.

4. Arbeitswerkzeug (40) nach einem der vorhergehenden Ansprüche, **dadurch gekennzeichnet, dass** die beiden benachbarten Arbeitselemente (50) im Bereich der Anreihseite jeweils einen Konturabschnitt (59) aufweisen, mittels denen der Abstand im Spaltbereich (SP) kontinuierlich und/oder diskontinuierlich erweitert ist.

5. Arbeitswerkzeug (40) nach einem der vorhergehenden Ansprüche, **dadurch gekennzeichnet, dass** der Träger (41) an einer Seite oder an zwei gegenüberliegenden Seiten einen Befestigungsabschnitt (42) aufweist, um ein einseitig oder beidseitig eingespanntes Biegeelement zu bilden, wobei insbesondere vorgesehen sein kann,
dass der Träger (41) einseitig einen Befestigungsabschnitt (42) zum Befestigen an einer Arbeitsmaschine aufweist, dass der Träger (41) gegenüberliegend dem Befestigungsabschnitt (42) ein auskragendendes Ende mit einem Endabschnitt (41.1) aufweist, und dass sich die Reihe der aneinandergereihten Arbeitselemente (50) zumindest bereichsweise zwischen dem Befestigungsabschnitt (42) und dem Endabschnitt (41.1) erstreckt.

6. Arbeitswerkzeug (40) nach einem der vorhergehenden Ansprüche, **dadurch gekennzeichnet, dass** die Arbeitselemente (50) als Arbeitsabschnitt (51) eine vorzugsweise gerundete Schneidkante, eine Verdrängerkante oder eine Brechkante aufweisen.

7. Arbeitswerkzeug (40) nach einem der vorhergehenden Ansprüche, **dadurch gekennzeichnet, dass** zumindest eines der Arbeitselemente (50) einen Befestigungsabschnitt mit einem Stützabschnitt (53.1) aufweist, wobei der Befestigungsabschnitt vorzugsweise plattenförmig ausgebildet ist, dass der Stützabschnitt (53.1) gegenüber einer Auflagefläche (46.1) des Trägers (41) abgestützt ist, und dass zwischen der Auflagefläche (46.1) und dem Stützabschnitt (53.1) zumindest bereichsweise eine stoffschlüssige Verbindung angeordnet ist, die das Arbeitselement (50) mit dem Träger (41) verbindet.

8. Arbeitswerkzeug (40) nach einem der vorhergehenden Ansprüche, **dadurch gekennzeichnet, dass** an den Befestigungsabschnitt des zumindest einen Arbeitselements (50) der Arbeitsabschnitt (51) mittelbar oder unmittelbar einteilig angeschlossen ist, dass der Befestigungsabschnitt ein dem Arbeitsabschnitt (51) abgewandtes Ende aufweist, und dass sich der Querschnitt des Arbeitselements (50) in Richtung von dem Arbeitsabschnitt (51) in Richtung auf das abgewandte Ende zumindest bereichsweise kontinuierlich und/oder oder diskontinuierlich verjüngt.

9. Arbeitswerkzeug (40) nach einem der vorhergehenden Ansprüche, **dadurch gekennzeichnet, dass** an den Befestigungsabschnitt ein Ansatz (56) angeformt ist, der einen weiteren Stützabschnitt (53.2.2) aufweist, mit dem er gegenüber einer Stützfläche des Trägers (41), die vorzugsweise von dem freien Ende (41.3) des Trägers (41) gebildet ist, abgestützt ist, und dass zwischen der Stützfläche und dem weiteren Stützabschnitt (53.2.2) eine stoffschlüssige Verbindung angeordnet ist, die das Arbeitselement (50) mit dem Träger (41) verbindet, wobei insbesondere vorgesehen sein kann,
dass der Stützabschnitt (53.1) des Befestigungsabschnitts und der weitere Stützabschnitt (53.2.2) des Ansatzes (56) unter Bildung eines Winkels oder geradlinig ineinander übergehen.

10. Arbeitswerkzeug (40) nach einem der vorhergehenden Ansprüche **dadurch gekennzeichnet, dass** das Arbeitselement (50) eine Oberseite (52) aufweist, die eine Ableitfläche bildet, wobei die Ableitfläche vorzugsweise von dem Befestigungsabschnitt gebildet ist, dass die Ableitfläche mittelbar oder unmittelbar in den Arbeitsabschnitt (51) übergeht, dass sich an den Arbeitsabschnitt (51) eine Freifläche (57) mittelbar oder unmittelbar anschließt, und dass die Ableitfläche eine ebene Fläche bildet, die mit der Freifläche (57) einen spitzen Winkel, vorzugsweise im Bereich zwischen 15° und 90° einschließt, oder dass die Ableitfläche eine zumindest bereichsweise konvexe oder konkave Geometrie aufweist.

11. Arbeitswerkzeug (40) nach einem der vorhergehenden Ansprüche, **dadurch gekennzeichnet, dass** der Abstandshalter (55) im Bereich des Befestigungsabschnitts des Arbeitselements (50) angeformt ist, und/oder dass der Konturabschnitt (59) zumindest bereichsweise im Bereich des Ansatzes (56) des Arbeitselements (50) verläuft.

12. Arbeitswerkzeug (40) nach einem der vorhergehenden Ansprüche, **dadurch gekennzeichnet, dass** die Arbeitselemente (50) jeweils eine Anlagefläche (54) aufweisen, mittels denen sie an einem Anlegeabschnitt (46.2) des Trägers (41) angelegt sind, wobei der Anlegeabschnitt (46.2) vorzugsweise parallel zu dem Arbeitsabschnitt (51) verläuft, und/oder
dass der Träger (41) in Form eines Blechs oder blechförmig, beispielsweise auch als Schmiedeteil, ausgebildet ist, und/oder
dass die Abstandshalter als Noppen, oder als Rippen ausgebildet sind.

13. Arbeitswerkzeug (40) nach einem der Ansprüche 1 bis 12, **dadurch gekennzeichnet, dass** der Spaltbereich (SP) senkrecht zur Spaltbreite eine Spalthöhe aufweist, die sich zwischen einer Oberseite (52) und einer gegenüberliegend der Oberseite (52) angeordneten Unterseite erstreckt, dass auf halber Spalthöhe eine sich senkrecht zur Spalthöhe erstreckende Mittelebene angeordnet ist, und dass das zumindest eine Abstandselement (55) auf der Seite ober- oder unterhalb der Mittelebene angeordnet ist, die der Zugseite des Trägers zugewandt ist oder dass die Mittelebene das zumindest eine Abstandselement (55) schneidet.

14. Arbeitswerkzeug (40) nach einem der vorhergehenden Ansprüche, **dadurch gekennzeichnet, dass** der Spaltbereich (SP) mit seiner Spaltlängserstreckung senkrecht zu dem Arbeitsabschnitt (51) verläuft oder dazu im Winkel steht oder dass zumindest eines der Arbeitselemente (50) ein oder mehrere Versatzstücke (52.2) aufweist, die einen winkelförmigen Verlauf des Spaltbereichs (SP) in Richtung der Richtung der Spaltlängserstreckung schaffen.

15. Arbeitswerkzeug (40) nach einem der vorhergehenden Ansprüche, **dadurch gekennzeichnet, dass** zumindest eines der Abstandselemente (50) ein oder mehrere Versatzstücke (52.2) aufweist, die einen winkelförmigen Verlauf des Spaltbereichs (SP) oder einen Versatz in Richtung der Spalthöhe schaffen, und/oder dass sich der Abstandshalter (55) nur über einen Teilbereich der Spalthöhe des Spaltbereichs (SP) erstreckt und wobei vorzugsweise vorgesehen ist, dass der Abstandshalter (55) im Abstand zu wenigstens einer der an den Spaltbereich (SP) anschließenden Endflächen des Arbeitselements (50) steht.

16. Arbeitswerkzeug (40) nach einem der vorhergehenden Ansprüche, **dadurch gekennzeichnet, dass** im Spaltbereich (SP) ein Verbindungsmaterial einer stoffschlüssigen Verbindung angeordnet ist, wobei im Verbindungsmaterial Partikel als Abstandshalter (55) angeordnet sind, und dass die im Verbindungsmaterial als Abstandshalter (55) angeordneten Partikel einen mittleren Durchmesser im Bereich zwischen 50µm und 800µm aufweisen.

## Claims

1. Work tool (40), in particular a ground engaging tool, preferably an agricultural ground engaging tool, with a carrier (41) which has at least two work elements (50) in the area of an operating side, wherein the work elements (50) consist of a hard material, in particular hard metal, or have a hard material, wherein the work elements (50) have a work section (51) and the work elements (50) being arranged in a row on the carrier (41) and preferably are fixed by a material bond, the adjoining faces of at least some of the adjacent work elements (50) being arranged opposite one another in the adjoining region, at least in some regions, with a gap region (SP) being formed,
**characterized**
**in that** at least one of the work elements (50) comprises a spacer (55) which keeps the work elements (50) spaced apart, forming the gap region (SP), and in that the spacer (55) bears against the opposing work element (50), and/or
**characterized**
**in that** at least one of the adjacent work elements (50) comprises, in the region of the adjoining face, a shaped section (59) by means of which the distance in the gap region (SP) is widened in a continuous and/or discontinuous manner, the gap width increasing with increasing distance from a neutral axis (NFT) about which a component bending of the carrier (41) takes place.

2. Work tool (40) according to one of the preceding claims, **characterized in that** the at least one spacer (55) is arranged at least partially in the gap region (SP), wherein it may preferably be provided that the gap region (SP) is at least partially filled by means of a bonding material, for example by means of a soldering material or an adhesive material, and that the spacer (55) is at least partially embedded in the bonding material.

3. Work tool (40) according to one of the preceding claims, **characterized in that** one or both adjacent work elements (50) comprise at least one integrally formed spacer (55), and/or **in that** the work elements (50) comprise at least one spacer (55) on opposite sides or **in that** the work elements (50) comprise a spacer (55) on one side only.

4. Work tool (40) according to one of the preceding claims, **characterized in that** the two adjacent work elements (50) each comprise a shaped section (59) in the region of the adjoining face, by means of which the distance in the gap region (SP) is widened continuously and/or discontinuously.

5. Work tool (40) according to one of the preceding claims, **characterized in that** the carrier (41) comprises a fastening section (42) on one side or on two opposite sides in order to form a flexural element clamped on one or on both sides, wherein it may in particular be provided that the carrier (41) comprises a fastening section (42) on one side for fastening to a working machine, that the carrier (41) comprises, opposite the fastening section (42), a cantilevered end with an end section (41.1), and that the row of work elements (50) arranged in a row extends at least in some areas between the fastening section (42) and the end section (41.1).

6. Work tool (40) according to one of the preceding claims, **characterized in that** the work elements (50) comprise, as a work section (51), a preferably rounded cutting edge, a displacing edge or a crushing edge.

7. Work tool (40) according to one of the preceding claims, **characterized in that** at least one of the work elements (50) comprises a fastening section with a support section (53.1), the fastening section preferably being designed in a plate-like manner, **in that** the support section (53.1) is supported with respect to a bearing surface (46.1) of the carrier (41) and that between the bearing surface (46.1) and the support section (53.1), at least in some areas, there is a connection by a material bond which connects the work element (50) to the carrier (41).

8. Work tool (40) according to one of the preceding claims, **characterized in that** the work section (51) is directly or indirectly integrally connected to the fastening section of the at least one work element (50) , **in that** the fastening section comprises an end averted from the work section (51), and **in that** the cross section of the work element (50) tapers in the direction from the work section (51) in the direction of the averted end, at least in some areas, in a continuous and/or discontinuous manner.

9. Work tool (40) according to one of the preceding claims, **characterized in that** a projection (56) is integrally formed on the fastening section and comprises a further support section (53.2.2), by means of which it is supported with respect to a support surface of the carrier (41), which is preferably formed by the free end (41.3) of the carrier (41), and that a connection by a material bond is arranged between the support surface and the further support section (53.2.2), which connects the work element (50) to the carrier (41), wherein in particular it may be provided that the support section (53.1) of the fastening section and the further support section (53.2.2) of the projection (56) merge into one another at an angle or in a straight line.

10. Work tool (40) according to one of the preceding claims, **characterized in that** the work element (50) comprises a top side (52) that forms a deflection surface, wherein the deflection surface is preferably formed by the fastening section, **in that** the deflection surface merges directly or indirectly into the work section (51), **in that** a relief surface (57) directly or indirectly adjoins the work section (51), and **in that** the deflection surface forms a flat surface that forms an acute angle, preferably in the range between 15° and 90°, with the relief surface (57), or that the deflection surface comprises a geometry which is convex or concave at least in some regions.

11. Work tool (40) according to one of the preceding claims, **characterized in that** the spacer (55) is integrally formed in the region of the fastening section of the work element (50), and/or
**in that** the shaped section (59) extends in the region of the projection (56) of the work element (50) at least sectionally.

12. Work tool (40) according to one of the preceding claims, **characterized in that** the work elements (50) each comprise a contact surface (54), by means of which they are placed against a supporting section (46.2) of the carrier (41), the supporting section (46.2) preferably extending parallel to the work section (51), and/or
**in that** the carrier (41) is designed as a sheet or in the form of a sheet, for example also as a forged part, and/or
**in that** the spacers are designed as knobs or as ribs.

13. Work tool (40) according to one of claims 1 to 12, **characterized in that** the gap region (SP) comprises, perpendicular to the gap width, a gap height which extends between a top side (52) and an underside arranged opposite the top side (52), **in that** a center plane extending perpendicular to the gap height is arranged at half the gap height and that the at least one spacer element (55) is arranged on the side above or below the center plane, which faces the tension side of the carrier, or that the center plane intersects the at least one spacer element (55).

14. Work tool (40) according to one of the preceding claims, **characterized in that** the gap region (SP) extends with its gap lengthwise perpendicular to the work section (51) or is at an angle thereto, or **in that** at least one of the work elements (50) comprises one or more offset pieces (52.2) that create an angular course of the gap region ( SP) in the direction of the length of the gap.

15. Work tool (40) according to one of the preceding claims, **characterized in that** at least one of the spacer elements (50) comprises one or more offset pieces (52.2) which create an angular course of the gap region (SP) or an offset in the direction of the gap height, and/or
that the spacer (55) extends only over a part of the gap height of the gap region (SP) and wherein it is preferably provided that the spacer (55) is at a distance from at least one of the end surfaces of the work element (50) adjoining the gap region (SP).

16. Work tool (40) according to one of the preceding claims, **characterized in that** a bonding material of a connection by a material bond is arranged in the gap region (SP), and **in that** particles are arranged in the bonding material as spacers (55), and **in that** the particles arranged in the bonding material as spacers (55) have a mean diameter in the range between 50 µm and 800 µm.

## Revendications

1. Outil de travail (40), en particulier outil de travail du sol, de préférence outil de travail du sol agricole, avec un support (41), qui présente dans la zone d'un côté de travail au moins deux éléments de travail (50), les éléments de travail (50) étant constitués d'un matériau dur, en particulier de métal dur, ou ceux-ci présentant un matériau dur, les éléments de travail (50) présentant une section de travail (51), et les éléments de travail (50) étant fixés les uns à la suite des autres sur le support (41), de préférence par liaison de matière, les côtés de jonction d'au moins une partie des éléments de travail (50) voisins se faisant face à distance les uns des autres dans la zone de jonction, au moins par zones, en formant une zone de fente (SP),
**caractérisé en ce qu'**au moins l'un des éléments de travail (50) présente une pièce à distance (55) qui maintient les éléments de travail (50) à distance en formant la zone de fente (SP), et **en ce que** la pièce à distance (55) s'applique contre l'élément de travail (50) opposé, et/ou
**caractérisé en ce qu'**au moins l'un des éléments de travail (50) voisins présente, dans la zone du côté de jonction, une section de contour (59) au moyen de laquelle l'écartement dans la zone de fente (SP) est élargi de manière continue et/ou discontinue, la largeur de fente augmentant avec l'accroissement de la distance par rapport à une fibre neutre (NFT) autour de laquelle a lieu une flexion de l'élément de construction du support (41).

2. Outil de travail (40) selon l'une des revendications précédentes, **caractérisé en ce que** l'au moins une pièce à distance (55) est disposée au moins par zones dans la zone de fente (SP), sachant qu'il peut être prévu de préférence que la zone de fente (SP) soit remplie au moins partiellement au moyen d'un matériau de liaison, par exemple au moyen d'un matériau de brasage ou d'un matériau adhésif, et que la pièce à distance (55) est noyée au moins par zones dans le matériau de liaison.

3. Outil de travail (40) selon l'une des revendications précédentes, **caractérisé en ce que** l'un ou les deux éléments de travail (50) voisins présentent au moins une pièce à distance (55) formée d'un seul tenant, et/ou **en ce que** les éléments de travail (50) présentent chacun au moins une pièce à distance (55) sur des côtés opposés, ou **en ce que** les éléments de travail (50) ne présentent une pièce à distance (55) que d'un seul côté.

4. Outil de travail (40) selon l'une des revendications précédentes, **caractérisé en ce que** les deux éléments de travail (50) voisins présentent chacun, dans la zone du côté de jonction, une section de contour (59) au moyen de laquelle la distance dans la zone de fente (SP) est élargie de manière continue et/ou discontinue.

5. Outil de travail (40) selon l'une des revendications précédentes, **caractérisé en ce que** le support (41) présente sur un côté ou sur deux côtés opposés une section de fixation (42) pour former un élément de pliage serré d'un côté ou des deux côtés, sachant qu'il peut être prévu en particulier que le support (41) présente d'un côté une section de fixation (42) pour la fixation à une machine de travail, que le support (41) présente à l'opposé de la section de fixation (42) une extrémité en porte-à-faux avec une section d'extrémité (41.1), et **en ce que** la rangée d'éléments de travail (50) alignés les uns à côté des autres s'étend au moins par zones entre la section de fixation (42) et la section d'extrémité (41.1).

6. Outil de travail (40) selon l'une des revendications précédentes, **caractérisé en ce que** les éléments de travail (50) présentent comme section de travail (51) une arête de coupe de préférence arrondie, une arête de refoulement ou une arête de rupture.

7. Outil de travail (40) selon l'une des revendications précédentes, **caractérisé en ce qu'**au moins l'un des éléments de travail (50) présente une section de fixation avec une section de support (53.1), la section de fixation étant de préférence réalisée en forme de plaque, **en ce que** la section de support (53. 1) est soutenue par rapport à une surface d'appui (46.1) du support (41), et **en ce qu'**entre la surface d'appui (46.1) et la section de support (53.1) est disposée au moins par zones une liaison de matière qui relie l'élément de travail (50) au support (41).

8. Outil de travail (40) selon l'une des revendications précédentes, **caractérisé en ce que** la section de travail (51) est raccordée directement ou indirectement d'un seul tenant à la section de fixation de l'au moins un élément de travail (50), **en ce que** la section de fixation présente une extrémité opposée à la section de travail (51), et **en ce que** la section transversale de l'élément de travail (50) se rétrécit de manière continue et/ou discontinue au moins par zones dans la direction de la section de travail (51) vers l'extrémité opposée.

9. Outil de travail (40) selon l'une des revendications précédentes, **caractérisé en ce que** sur la section de fixation est formé un appendice (56) qui présente une autre section de support (53.2.2) par laquelle il est soutenu par rapport à une surface d'appui du support (41) qui est de préférence formée par l'extrémité libre (41.3) du support (41), et **en ce qu'**entre la surface d'appui et l'autre section de support (53. 2.2) est disposée une liaison de matière qui relie l'élément de travail (50) au support (41), sachant qu'il peut être prévu en particulier que la section de support (53.1) de la section de fixation et l'autre section de support (53.2.2) de l'appendice (56) se rejoignent en formant un angle ou en ligne droite.

10. Outil de travail (40) selon l'une des revendications précédentes, **caractérisé en ce que** l'élément de travail (50) présente une face supérieure (52) qui forme une surface de déflexion, la surface de déflexion étant de préférence formée par la section de fixation, **en ce que** la surface de déflexion se raccorde directement ou indirectement à la section de travail (51), **en ce qu'**une surface de dépouille (57) se raccorde directement ou indirectement à la section de travail (51), et **en ce que** la surface de déflexion forme une surface plane qui forme avec la surface de dépouille (57) un angle aigu, de préférence dans la plage comprise entre 15° et 90°, ou **en ce que** la surface de déflexion présente une géométrie convexe ou concave au moins par zones.

11. Outil de travail (40) selon l'une des revendications précédentes, **caractérisé en ce que** la pièce à distance (55) est formée dans la zone de la section de fixation de l'élément de travail (50), et/ou **en ce que** la section de contour (59) s'étend au moins par zones dans la zone de l'appendice (56) de l'élément de travail (50).

12. Outil de travail (40) selon l'une des revendications précédentes, **caractérisé en ce que** les éléments de travail (50) présentent chacun une surface d'appui (54) au moyen de laquelle ils sont appliqués sur une partie d'appui (46.2) du support (41), la partie d'appui (46.2) s'étendant de préférence parallèlement à la section de travail (51), et/ou **en ce que** le support (41) est réalisé sous la forme d'une tôle ou en forme de tôle, par exemple également sous la forme d'une pièce forgée, et/ou en ce que les éléments d'écartement sont réalisés sous la forme de boutons ou de nervures.

13. Outil de travail (40) selon l'une des revendications 1 à 12, **caractérisé en ce que** la zone de fente (SP) présente, perpendiculairement à la largeur de fente, une hauteur de fente qui s'étend entre une face supérieure (52) et une face inférieure disposée à l'opposé de la face supérieure (52), **en ce qu'**à mi-hauteur de la fente est disposé un plan médian s'étendant perpendiculairement à la hauteur de la fente, et **en ce que** le au moins un élément à distance (55) est disposé sur le côté au-dessus ou au-dessous du plan médian qui est tourné vers le côté de traction du support ou **en ce que** le plan médian coupe le au moins un élément à distance (55).

14. Outil de travail (40) selon l'une des revendications précédentes, **caractérisé en ce que** la zone de fente (SP) s'étend avec son extension longitudinale de fente perpendiculairement à la section de travail (51) ou forme un angle avec celle-ci, ou **en ce qu'**au moins l'un des éléments de travail (50) présente un ou plusieurs décalages (52.2) qui créent un tracé angulaire de la zone de fente (SP) dans la direction de l'extension longitudinale de fente.

15. Outil de travail (40) selon l'une des revendications précédentes, **caractérisé en ce qu'**au moins l'un des éléments à distance (50) présente une ou plusieurs pièces de décalage (52.2) qui créent un tracé angulaire de la zone de fente (SP) ou un décalage dans le sens de la hauteur de fente, et/ou **en ce que** la pièce à distance (55) ne s'étend que sur une partie de la hauteur de fente de la zone de fente (SP) et/où il est prévu de préférence que la pièce à distance (55) se trouve à distance d'au moins une des surfaces d'extrémité de l'élément de travail (50) se raccordant à la zone de fente (SP).

16. Outil de travail (40) selon l'une des revendications précédentes, **caractérisé en ce qu'**un matériau de liaison d'une liaison de matière est disposé dans la zone de fente (SP), des particules étant disposées dans le matériau de liaison en tant que pièces à distance (55), et **en ce que** les particules disposées dans le matériau de liaison en tant que pièces à distance (55) présentent un diamètre moyen dans la plage comprise entre 50 µm et 800 µm.
